# EUROPEAN PATENT APPLICATION

(11) **EP 1 720 344 A1**
(43) Date of publication of application: **08.11.2006**
(21) Application number: 06112965.6
(22) Date of filing: 24.04.2006
(51) Int. Cl.: H04N 5/44, G06F 1/16

(54) **Mounting structure of flat panel display module**

(30) Priority: 02.05.2005 KR 20050036698
(71) Applicant: Samsung SDI Co., Ltd., Suwon-si Gyeonggi-do (KR)
(72) Inventor: Ahn, Joong-Ha Legal IP Team,, yongin-si,Gyeonggi-do 449-577 (KR)
(74) Representative: Hengelhaupt, Jürgen

(57) **Abstract**

A mounting structure to a flat panel display (FPD) module which can safely and firmly mount a FPD module in a case or on a surface such as a wall, ceiling, accoutrement, furniture, or window, and a FPD module including the same. The mounting structure includes: a chassis including a chassis base; a bracket disposed on the chassis base; and a connecting member disposed on the bracket and separated from the chassis base by a predetermined gap.

## Description

### BACKGROUND OF THE INVENTION

### Field of the Invention

Aspects of the present invention relate to a mounting structure of a flat panel display module and a flat panel display module including the same. More particularly, aspects of the present invention relate to a safe and secure mounting structure of a flat panel display (FPD) module to firmly mount an FPD module in a case or on a surface such as a wall, ceiling, accoutrement, furniture, or window and a flat panel display module including the same.

### Description of the Related Art

Recently, flat panel display (FPD) devices have been introduced. FPD devices are divided into classifications such as liquid crystal display (LCD) devices, plasma display panel (PDP) devices, field emission display (FED) devices, and vacuum fluorescent display (VFD) devices, among others.

FPD devices have replaced cathode-ray tube display (CRT) devices because of their space-saving flat and thin geometries.

FPD modules comprise FPD panels, apparatuses for driving the FPD panels, and chasses supporting the FPD panels. Front and rear cases are mounted on the FPD modules to form FPD devices.

Users can mount FPD devices on surfaces such as walls, ceilings, furniture, accoutrements, or windows of stationary structures and vehicles for convenience (hereinafter, any reference to walls refers to such surfaces including walls, ceilings, furniture, accoutrements, windows, etc.) To this end, rear cases can be directly mounted on walls or members installed on chasses can be mounted on walls. FPD devices can be mounted flush or at an angle.

However, when FPD devices are mounted on walls, stress is concentrated on the mounting members connecting the FPD modules to the walls such that a mounting structure can be damaged or FPD panels can be damaged. In particular, these problems become more serious as FPD modules increase in size because of the added weight of the large FPD panels and the inherently low toughness and low rigidity of FPD panels.

Therefore, when FPD devices are mounted on walls, it is very important how FPD modules are coupled to cases and how FPD modules are coupled to walls. Accordingly, a mounting structure in which FPD modules are safely and firmly mounted on cases or walls is required.

### SUMMARY OF THE INVENTION

Accordingly, aspects of the present invention provide a safer and firmer mounting structure of a flat panel display (FPD) module which can mount a FPD module in a case or on a wall by installing one or more connecting members separated from a chassis base by a predetermined gap in a plurality of brackets, and a FPD module including the same.

Additional aspects and/or advantages of the invention will be set forth in part in the description which follows and, in part, will be obvious from the description, or may be learned by practice of the invention.

An aspect of the present invention provides a mounting structure for a flat panel display module, comprising: a chassis including a chassis base; a bracket disposed on the chassis base; and a connecting member disposed on the bracket and separated from the chassis base by a predetermined gap.

According to an aspect of the invention, there may be a plurality of the brackets.

According to an aspect of the invention, the brackets may be integral to the chassis base.

According to an aspect of the invention, the bracket may comprise: a mounting portion mounted on the chassis base; a bending portion extending from the mounting portion; a ridge portion extending from the bending portion; and the ridge portion may extend beyond the bending portion. The ridge portion may be at an angle to the chassis base as may the extended ridge portion.

The connecting member may be mounted on the ridge portion or the extended ridge portion.

The connecting member may comprise: a coupling portion mounted on the bracket; and a module supporting portion integrally formed with the coupling portion.

The coupling portion may be welded to the bracket.

The coupling portion may be coupled to the bracket by fasteners such as screws.

Preferably, the coupling portion is coupled to the bracket by rivets.

The coupling portion may be coupled to the bracket by adhesives such as TOX®.

The module supporting portion may comprise a threaded socket or other male or female connector for a threaded or non-threaded fastener.

According to another aspect of the present invention, there is provided a flat panel display module, comprising: a display panel; a device to drive the display panel; a chassis supporting the display panel and the driving device, and comprising: a chassis base, a bracket disposed on the chassis base, and a connecting member formed on the bracket and separated from the chassis base by a predetermined gap.

The display panel may be a plasma display panel.

There may be a plurality of the brackets.

The bracket may comprise: a mounting portion mounted on the chassis base; a bending portion extending from the mounting portion; a ridge portion extending from the bending portion; and the ridge portion may extend beyond the bending portion. The ridge portion may be at an angle to the chassis base and the extended ridge portion may be at an angle to the ridge portion.

The connecting member may be mounted on the ridge portion. The connecting member may be mounted on the extended ridge portion.

The connecting member may comprise: a coupling portion mounted on the bracket; and a module supporting portion integrally formed with the coupling portion.

The coupling portion may be welded to the bracket.

The coupling portion may be coupled to the bracket by fasteners such as screws.

The coupling portion may be coupled to the bracket by adhesives such as TOX®.

The module supporting portion may comprise a threaded socket or other male or female component for fasteners such as key-hole or spring-clip.

### BRIEF DESCRIPTION OF THE DRAWINGS

These and/or other aspects and advantages of the present invention will become apparent and more readily appreciated from the following description of the embodiments, taken in conjunction with the accompanying drawings of which:
FIG. 1 is an exploded perspective view of a plasma display module including a mounting structure of a flat panel display (FPD) module according to an embodiment of the present invention;
FIG. 2 is an exploded perspective view of a bracket of FIG. 1;
FIG. 3 is a cross-sectional view taken along line III-III of FIG. 2; and

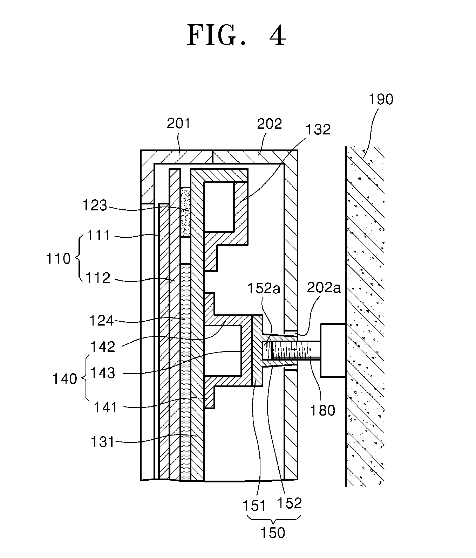

FIG. 4 is a partial cross-sectional view of the plasma display module fixed to a wall by coupling mounting bolts to a connecting member according to an embodiment of the present invention.

### DETAILED DESCRIPTION OF THE EMBODIMENTS

Hereinafter, aspects of the present invention will now be described in greater detail, examples of which are illustrated in the accompanying drawings, wherein like reference numerals refer to the like elements throughout. The embodiments are described below in order to explain the present invention by referring to the figures.

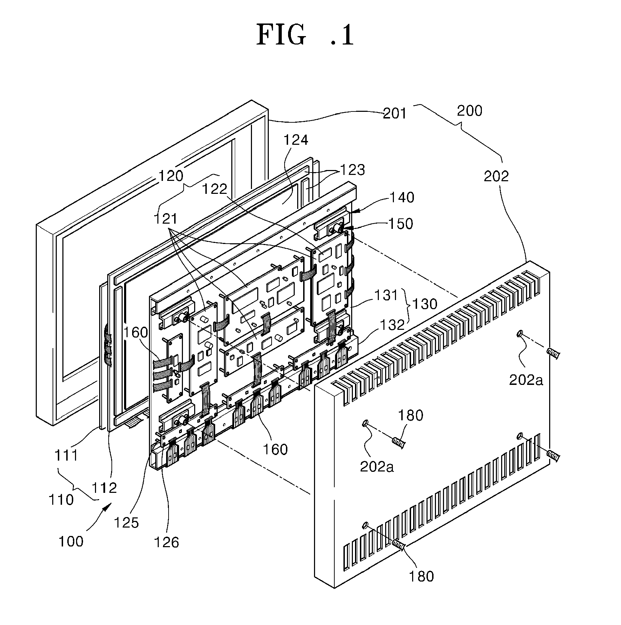

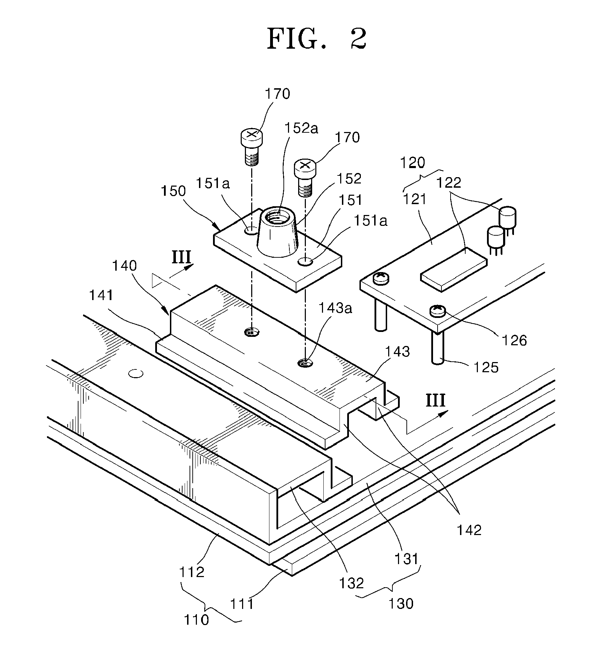

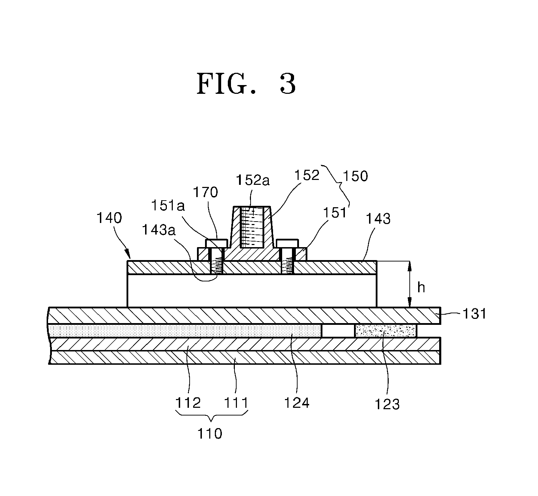

FIG. 1 is an exploded perspective view of a plasma display module 100 including a mounting structure of a flat panel display (FPD) module according to an embodiment of the present invention, FIG. 2 is an exploded perspective view of a bracket of FIG. 1, and FIG. 3 is a cross-sectional view taken along line III-III of FIG. 2.

Referring to FIG. 1, the plasma display module 100 includes a plasma display panel 110, a driving device 120, a chassis 130, brackets 140, and a plurality of connecting members 150.

The plasma display panel 110 displays an image and comprises a first substrate 111 and a second substrate 112.

The driving device 120 drives the plasma display panel 110 and comprises a circuit board 121 and a plurality of circuit elements 122 disposed on the circuit board 121.

The plasma display panel 110 is electrically connected to the circuit board 121 via a signal transmitting member 160. The signal transmitting member 160 may be a flexible printed cable (FPC), a tape carrier package (TCP), etc.

The chassis 130 can be formed of metal such as aluminum, and manufactured using a process such as casting or a press process, etc.

The chassis 130 comprises a chassis base 131 and a reinforcing member 132 for reinforcing rigidity of the chassis base 131. While the chassis base 131 and the reinforcing member 132 are described as separate components in the shown example, it is understood that the chassis 130 can comprise a single integral member chassis base 131 and reinforcing member 132 obtained by bending a portion of the chassis base 131 to reinforce the chassis base 131.

The plasma display panel 110 is fixed to the front surface of the chassis 130 and the circuit board 121 is mounted on the rear surface of the chassis 130. The chassis 130 mechanically supports the plasma display panel 110 and dissipates heat generated by the plasma display panel 110 during operation such that the plasma display panel 110 can be cooled.

The plasma display panel 110 and the chassis 130 are coupled via double-sided adhesive members 123 attached to the rear surface of the plasma display panel 110. The double-sided adhesive member 123 may be double-sided tape.

A heat dissipating sheet 124 is interposed between the plasma display panel 110 and the chassis 130. The front surface of the heat dissipating sheet 124 is adhered to the rear surface of the plasma display panel 110, and the rear surface of the heat dissipating sheet 124 is adhered to the front surface of the chassis 130.

In the present embodiment, the rear surface of the heat dissipating sheet 124 is adhered to the front surface of the chassis 130, but the present invention is not limited thereto. That is, the rear surface of the heat dissipating sheet 124 may be separated from the chassis 130. In this regard, heat transferred from the plasma display panel 110 to the heat dissipating sheet 124 is transferred to the chassis 130 via convection.

The circuit board 121 is mounted on the chassis base via a boss 125 and secured with threaded bolts 126.

In the example shown, four brackets 140 are symmetrically formed on the rear surface of the chassis base 131.

It is understood that the present invention is not limited to the four brackets 140 shown in this embodiment. That is, the number of the brackets 140 is not particularly limited as long as the brackets 140 can fix a flat panel display module to a case or wall. At least one bracket 140 will suffice according to some embodiments of the present invention.

Each of the brackets 140 comprises a mounting portion 141, a bending portion 142, and a ridge portion 143.

The mounting portion 141 is welded to the chassis base 131.

In the present embodiment, the mounting portion 141 is welded to the chassis base 131, but the present invention is not limited thereto. That is, the mounting portion 141 and the chassis base 131 may be coupled by one or more other fasteners including screws, rivets, or adhesives such as TOX®.

The bending portion 142 is bent to extend to the mounting portion 141 and supports the ridge portion 143. In the present example, the ridge portion 143 is parallel to the base chassis, but the present invention is not limited thereto. That is, the ridge portion 143 can be at an angle to the chassis base 131. Similarly, it is understood that the ridge portion 143 can extend beyond the bending portion 142.

The ridge portion 143 is supported by the bending portions 142. The connecting members 150 are mounted on the ridge portion 143.

In the present embodiment, the brackets 140, which each comprise the mounting portion 141, the bending portion 142, and the ridge portion 143, form rectangular cross sections, but the present invention is not limited thereto. That is, the brackets 140 can have any shape, as long as the connecting members 150 can be mounted on the upper surfaces of the brackets 140 and be separated by a predetermined distance from the chassis base 131, for example, the brackets 140 may form hexagonal cross sections by adding an additional bend to the bending portions 142. Similarly, it is understood that the brackets 140 can form an I-beam cross section or C-beam cross section when only one bending portion 142 is used. Other cross-sections are possible as well.

The connecting members 150 each comprise a coupling portion 151 and a module supporting portion 152.

The coupling portion 151 is coupled to the ridge portion 143 of the bracket 140 by screws.

More specifically, mounting holes 151a are formed in each coupling portion 151, and installation holes 143a threaded on the inside diameter are formed in the ridge portions 143 so that an operator can mount the coupling portions 151 to the brackets 140 using threaded bolts 170.

In the present embodiment, the coupling portions 151 are coupled to the brackets 140 using screws, but the present invention is not limited thereto. That is, the coupling portions 151 can be mounted on the brackets 140 by other methods such as welding, rivet coupling, or TOX®. If the coupling of the brackets 140 and the coupling portions 151 has a sufficient coupling force to support the flat panel display module, there are no particular limitations to the mounting members used or the method of fastening the coupling portions 151 to the bracket 140.

The module supporting portions 152 are integrally formed in the coupling portions 151 and include threaded sockets 152a. The threaded sockets 152a are coupled with the mounting bolts 180 to mount the plasma display module 100 on the wall 190. While described as including threaded socket fasteners 152a, it is understood that the module supporting portions 152 can include other fasteners such as key-hole or clip fasteners. Similarly, the mounting bolt 180 includes the corresponding mating fastener.

Referring to FIG. 1, the plasma display module 100 is stored in a case 200 that comprises a front case 201 and a rear case 202 located in front of and behind the chassis 130, respectively.

Case holes 202a through which the mounting bolts 180 pass are formed in the rear case 202.

The one end of the mounting bolt 180 is coupled with the threaded socket 152a and the other end of the mounting bolt 180 is installed on the wall 190 through the case hole 202a of the rear case 202.

In this embodiment, the mounting bolts 180 are mounted on the wall 190 in such a way that they can be coupled to the threaded sockets 152a.

In the present embodiment, the plasma display module 100 is directly mounted on the wall 190 using the mounting bolts 180, but the present invention is not limited thereto. That is, after the flat panel display module is mounted in the case 200, the case 200 can be mounted on the wall 190, etc.

In the present embodiment, the threaded socket 152a is formed in the module supporting portion 152, but the present invention is not limited thereto. That is, holes or grooves without machined threads can be formed in the module supporting portion 152. In this case, mounting members such as the mounting bolts 180 are welded or clipped to holes or grooves 152a, thereby firmly fixing the flat panel display module to the case 200 or the wall 190.

In the mounting structure of the flat panel display module, according to an embodiment of the present invention, the connecting member 150 is installed on the ridge portion 143 of the bracket 140 so that the bottom portion of the connecting member 150 is separated from the chassis base 131 by a predetermined gap h.

The predetermined gap h may be determined by selecting the distance of the bending portion 142 so that load applied to the connecting member 150 can be evenly distributed.

More specifically, even if the mounting bolt 180 is pushed toward the bracket 140 due to shock occurring during assembly or transportation, such that the load on the mounting structure rapidly increases, the bending portion 142 of the bracket 140 can absorb the shock, thereby preventing damage to the plasma display panel 110.

Also, in the shown embodiment of the mounting structure of the flat panel display module the coupling portion 151 contacts the ridge portion 143 of the bracket 140. Since the contact area of the coupling portion 151 with the ridge portion 143 is sufficiently large to dissipate stress concentration caused by the weight of the plasma display module 100 and impacts applied when the plasma display module 100 is mounted, damage can be prevented. That is, the load applied to the module supporting portion 152 of the connecting member 150 is evenly distributed over the bracket 140 through the coupling portion 151, thereby preventing stress from focusing on a particular portion and damaging the mounting structure.

An example of the installation by an operator of the illustrated embodiment of the mounting structure will now be described below.

The operator mounts the connecting member 150 on the bracket 140. More specifically, the operator couples the bolts 170 to the threaded installation holes 143a through the mounting holes 151 a formed in the coupling portion 151.

The operator mounts the bracket 140 including the connecting member 150 on the chassis base 131. The operator welds the mounting portion 141 of the bracket 140 to the chassis base 131. In this regard, the operator can mount the connecting portion 150 on the bracket 140 and then mount the bracket 140 on the chassis base 131 or for convenience, the operator can mount the bracket 140 on the chassis base 131 and then mount the connecting member 150 on the bracket 140.

The operator places the plasma display module 100 comprising the bracket 140 and the connecting member 150 in the case 200. In this regard, the operator arranges the module supporting portion 152 of the connecting member 150 to face the case hole 202a of the rear case 202.

The operator couples the one end of the mounting bolt 180 with the threaded socket 152a of the connecting member 150 through the case holes 202a and fixes the other end of the mounting bolt 180 to the wall 190, thereby fixing the plasma display module 100 to the wall 190.

In the present embodiment, the connecting member 150 containing the female threaded socket 152a which is separated from the chassis base 131 by a predetermined gap "h" is installed on the bracket 140. The mounting bolt 180 mounted on the wall 190 is coupled to the female threaded socket 152a, thereby more securely installing the plasma display module 100 to the wall 190. While the mounting bolt 180 is described as mounting the plasma display module 100 to a wall 190 in the example shown, it is understood that the mounting bolt 180 can mount the plasma display module 100 to other surfaces such as ceilings, furniture or windows of stationary structures and vehicles. Similarly, although the mounting bolt 180 is described as mounting the plasma display module 100 parallel to a wall 190 in the example shown, it is understood that the mounting bolt 180 can mount the plasma display module 100 at any angle to the wall 190.

According to an aspect of the present invention, a connecting member 150 is installed on a bracket 140 so that it is separated from a chassis base by a predetermined gap "h", thereby the bracket 140 provides energy absorbing and dissipating qualities and rigidity to securely mount a flat panel display device in a case or on a wall.

More specifically, when the connecting member 150 is installed on the bracket 140 and separated from the chassis base by the predetermined gap "h" of the bracket 140, then even if mounting bolts are pushed toward the bracket due to a shock caused during assembly or transportation, damage to the flat display panel is prevented.

According to the shown embodiment of the present invention, a load applied to the connecting member is evenly distributed over the bracket, thereby preventing damage to the mounting structure from stress concentrated on a particular portion.

Also, when the present invention is applied to a plasma display module, the plasma display module can be safely mounted on a wall or in a case, even for large-sized screen plasma display modules that are heavy and of low rigidity.

## Claims

1. A mounting structure of a flat panel display module, comprising:
a chassis including a chassis base;
a bracket disposed on the chassis base; and
a connecting member disposed on the bracket and separated from the chassis base by a predetermined gap.

2. The mounting structure according to claim 1, wherein there are a plurality of the brackets.

3. The mounting structure according to claim 1, wherein the bracket comprises:
a mounting portion mounted on the chassis base;
a bending portion extending from the mounting portion; and
a ridge portion extending from the bending portion.

4. The mounting structure according to claim 3, wherein the connecting member is mounted on the ridge portion.

5. The mounting structure according to claim 1, wherein the connecting member comprises:
a coupling portion mounted on the bracket; and
a module supporting portion integrally formed with the coupling portion.

6. The mounting structure according to claim 5, wherein the coupling portion is welded to the bracket.

7. The mounting structure according to claim 5, wherein the coupling portion is coupled to the bracket by screws.

8. The mounting structure according to claim 5, wherein the coupling portion is coupled to the bracket by rivets.

9. The mounting structure according to claim 5, wherein the module supporting portion comprises a threaded socket.

10. A flat panel display module, comprising:
a display panel;
a device to drive the display panel;
a chassis supporting the display panel and the driving device, and comprising:
a chassis base,
a bracket disposed on the chassis base; and
a connecting member formed on the bracket and separated from the chassis base by a predetermined gap.

11. The flat panel display module according to claim 10, wherein the display panel is a plasma display panel.

12. The flat panel display module according to claim 10, wherein there are a plurality of the brackets.

13. The flat panel display module according to claim 10, wherein the bracket comprises:
a mounting portion mounted on the chassis base;
a bending portion extending from the mounting portion; and
a ridge portion extending from the bending portion.

14. The flat panel display module according to claim 13, wherein the connecting member is mounted on the ridge portion.

15. The flat panel display module according to claim 10, wherein the connecting member comprises:
a coupling portion mounted on the bracket; and
a module supporting portion integrally formed with the coupling portion.

16. The flat panel display module according to claim 15, wherein the coupling portion is welded to the bracket.

17. The flat panel display module according to claim 15, wherein the coupling portion is coupled to the bracket by screws.

18. The flat panel display module according to claim 15, wherein the module supporting portion comprises a threaded socket.
